# FASCICULE DE BREVET EUROPEEN

(11) **EP 3 683 090 B1**
(45) Date de publication et mention de la délivrance du brevet: **08.11.2023**
(21) Numéro de dépôt: 20151882.6
(22) Date de dépôt: 15.01.2020
(51) Int. Cl.: B60N 2/00, B61D 33/00, B60R 21/015, B61L 15/00

(54) **SIÈGE À DÉTECTION D'OCCUPATION**
SITZ MIT BELEGUNGSERKENNUNG
SEAT WITH DETECTION OF OCCUPANCY

(30) Priorité: 15.01.2019 FR 1900354
(43) Date de publication de la demande: 22.07.2020
(73) Titulaire: ALSTOM Holdings, 93400 Saint-Ouen-sur-Seine (FR)
(72) Inventeur: SIMONI, Bastian, 94130 Nogent-sur-Marne (FR); DAGDAG, Selim, 65360 Momères (FR)
(74) Mandataire: Lavoix

(56) Documents cités:
- WO-A1-2014/044610
- US-A1- 2007 125 586
- US-A1- 2014 125 355
- US-B2- 7 476 861

## Description

La présente invention concerne un siège, notamment pour véhicule, comprenant un premier capteur agencé pour générer un premier signal électrique lors d'une installation d'un utilisateur sur le siège et lors de la libération du siège par l'utilisateur.

Dans l'industrie du transport ferroviaire, il est utile de connaître en temps réel l'état d'occupation des sièges d'un véhicule, de manière centralisée, par exemple pour détecter des places inoccupées et y diriger les utilisateurs.

Pour cela, il est connu d'utiliser un système de détection comprenant des capteurs de présence montés sur les sièges et communiquant avec un module d'acquisition centralisé. US2014125355A1 divulgue un tel siège équipé de détecteur de présence.

Un tel système peut fonctionner avec une connexion filaire de chaque capteur au module d'acquisition, ce qui permet le transfert d'informations et l'alimentation électrique des capteurs. Cependant, un tel système est complexe à installer et rend les opérations de maintenance fastidieuses. De plus, la multiplication des communications filaires est gênante dans l'espace limité d'un véhicule ferroviaire.

Des capteurs sans fil fonctionnant sans alimentation directe permettent de pallier ce problème. Les capteurs comprennent par exemple une batterie pour leur fournir l'énergie électrique nécessaire à leur fonctionnement. Cependant, les capteurs sont intégrés directement dans le volume de l'assise du siège, et le remplacement de la batterie épuisée nécessite un démontage complet du siège, ce qui constitue une opération fastidieuse.

Il est également connu d'utiliser des capteurs à récupération d'énergie capables de produire leur propre énergie électrique au moyen d'effets physiques, par exemple par effet piézoélectrique.

De tels capteurs génèrent de l'énergie, notamment sous forme d'une tension électrique lorsqu'ils sont activés, notamment lorsqu'un utilisateur s'assied sur le siège ou se lève. La tension électrique générée est suffisante pour alimenter temporairement un module de communication signalant qu'un utilisateur s'est assis ou levé. Ces systèmes de détection fonctionnent ainsi de manière autonome sans nécessiter d'alimentation électrique.

Cependant, ces systèmes ne donnent pas entière satisfaction. En effet, ils ne peuvent pas différencier un utilisateur qui s'assied d'un utilisateur qui se lève, et ne communiquent que des changements d'état au module d'acquisition centralisée. En cas de perte d'information dans la communication, l'état du siège peut être considéré par le système comme l'inverse de son état réel, sans possibilité de correction.

Un but de l'invention est donc de fournir un système de détection de l'occupation des sièges d'un véhicule ferroviaire permettant d'avoir une information plus précise et plus sûre de quant à l'état de chaque siège. D'autres objectifs de l'invention sont que le système de détection puisse fonctionner de manière autonome et sans fil.

A cet effet, l'invention a pour objet un siège du type précité, dans lequel le siège comprend également un deuxième capteur propre à générer un deuxième signal électrique de manière sensiblement continue ou répétée quand l'utilisateur est assis sur le siège.

Selon des modes de réalisation particuliers, le siège selon l'invention présente l'une ou plusieurs des caractéristiques ci-dessous, prise(s) indépendamment ou selon toute combinaison techniquement réalisable :
- le siège comprend un module de communication configuré pour émettre à destination d'un module d'acquisition un signal primaire lorsque le premier capteur génère le premier signal électrique et un signal secondaire lorsque l'utilisateur est assis sur le siège et que le deuxième capteur génère le deuxième signal électrique ;
- le premier capteur et le deuxième capteur sont des capteurs à récupération d'énergie ;
- le module de communication est un module autonome, alimenté électriquement uniquement par le premier capteur et le deuxième capteur ;
- le premier capteur comprend au moins un transducteur piézoélectrique ;
- le premier capteur comprend une pluralité de transducteurs piézoélectriques répartis sous une assise et/ou un dossier du siège, le premier capteur étant configuré pour détecter l'installation de l'utilisateur sur le siège ou la libération du siège par l'utilisateur, et générer le premier signal lorsqu'au moins un nombre prédéterminé des transducteurs piézoélectriques subissent une variation de contrainte mécanique ;
- le deuxième capteur comprend au moins une thermopile disposée sous une assise ou un dossier du siège, la thermopile présentant une première face s'étendant en regard de l'assise ou du dossier et une deuxième face s'étendant à l'écart de l'assise ou du dossier ;
- le module de communication est configuré pour arrêter d'émettre le signal secondaire suite à la libération du siège par l'utilisateur, quand bien même le deuxième capteur continuerait à émettre le deuxième signal en raison d'une température résiduelle de l'assise ou du dossier ; et
- la deuxième face de la thermopile est reliée par un conducteur thermique à une structure métallique du siège.

L'invention a également pour objet un véhicule ferroviaire, notamment ferroviaire, comprenant une pluralité de sièges tels que décrits plus haut, et un module d'acquisition propre à recevoir des signaux fonction du premier et/ou du deuxième signal, et à déterminer un état occupé ou libre de chacun des sièges en fonction des signaux reçus.

L'invention a de plus pour objet un procédé de détection de l'occupation par un utilisateur d'un siège tel que décrit plus haut, le procédé comprenant les étapes suivantes :
- installation de l'utilisateur sur le siège et application d'une pression par l'utilisateur sur le siège ;
- génération du premier signal par le premier capteur et émission d'un signal primaire à destination d'un module d'acquisition ;
- réception du signal primaire par le module d'acquisition et détermination d'un changement d'état du siège vers un état occupé ;
- occupation du siège par l'utilisateur et génération de manière continue ou répétée du deuxième signal par le deuxième capteur et émission continue ou répétée d'un signal secondaire à destination du module d'acquisition ;
- réception du signal secondaire par le module d'acquisition et confirmation de l'état occupé du siège, ou correction d'un état libre erroné par le module d'acquisition ;
- libération du siège par l'utilisateur, génération du premier signal par le premier capteur et émission du signal primaire à destination du module d'acquisition; et
- réception du signal primaire par le module d'acquisition et détermination d'un changement d'état du siège vers un état libre.

Selon des modes de réalisation particuliers, le procédé selon l'invention présente l'une ou plusieurs des caractéristiques ci-dessous, prise(s) indépendamment ou selon toute combinaison techniquement réalisable :
- l'étape de libération du siège comprend l'arrêt de l'émission répétée du signal secondaire.
- le signal primaire comprend trois trames redondantes, le module d'acquisition déterminant le changement d'état du siège par la réception d'au moins une desdites trames.

L'invention sera mieux comprise à la lecture de la description qui suit, donnée uniquement à titre d'exemple et faite en référence aux dessins annexés, parmi lesquels :
[Fig 1] la figure 1 est une vue de côté et en coupe partielle d'un véhicule ferroviaire selon l'invention ;
[Fig 2] la figure 2 est une vue en coupe d'un siège du véhicule ferroviaire de la figure 1, selon une première variante de l'invention ;
[Fig 3] la figure 3 est une vue en perspective d'une thermopile du siège de la figure 2 ; et
[Fig 4] la figure 4 est une vue en coupe d'un siège du véhicule ferroviaire de la figure 1, selon une deuxième variante de l'invention.

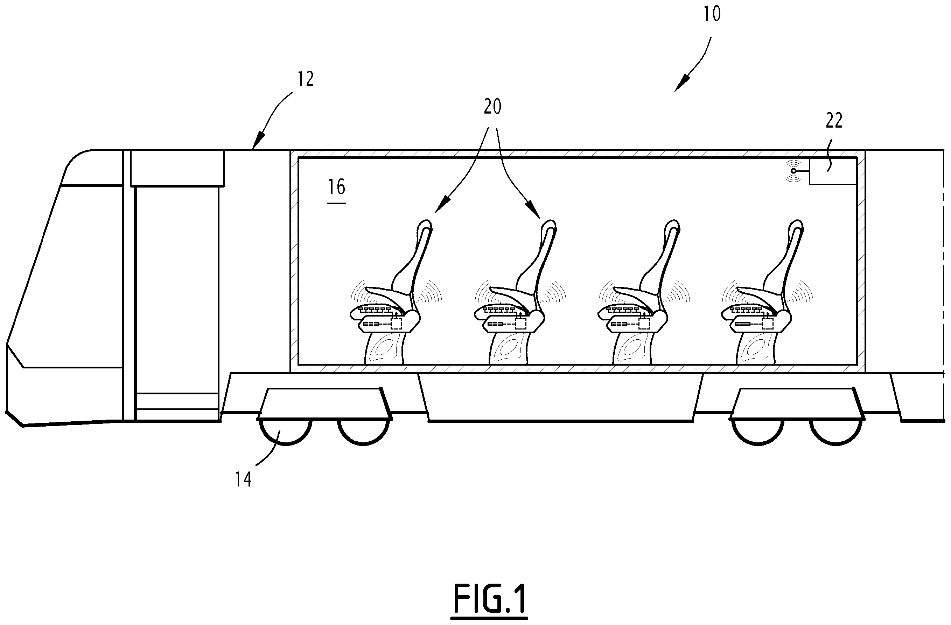

Le véhicule ferroviaire 10 représenté sur la figure 1 comprend une caisse 12 montée sur des roues 14 et définissant un compartiment 16 destiné à accueillir des voyageurs.

Ce véhicule ferroviaire 10 comprend une pluralité de sièges 20 disposés dans le compartiment 16, chaque siège 20 étant propre à accueillir un voyageur en position assise.

Le véhicule ferroviaire 10 comprend également un module d'acquisition 22, disposé par exemple dans le compartiment 16, propre à communiquer avec les sièges 20.

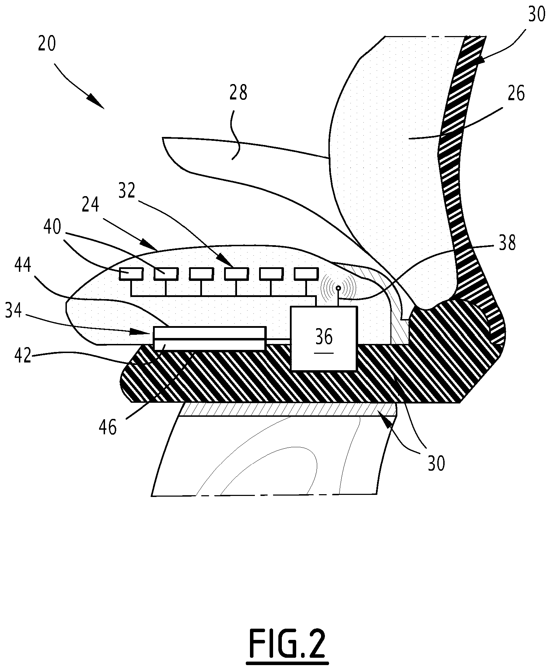

Comme représenté sur la figure 2, chaque siège 20 comprend une assise 24, un dossier 26 et avantageusement au moins un accoudoir 28, ainsi qu'une structure 30 portant l'assise 24, le dossier 26 et chaque accoudoir 28.

L'assise 24 est notamment une surface supérieure d'un coussin, de façon à améliorer le confort de l'utilisateur du siège 20.

La structure 30 comprend une partie métallique formant une armature rigide, et une partie en matériau plastique rigide fixée sur la partie métallique et améliorant l'aspect esthétique du siège 20.

Chaque siège 20 comprend de plus un premier capteur 32, un deuxième capteur 34 et un module de communication 36.

Les premiers capteurs, deuxièmes capteurs et modules de communication des sièges 20, ainsi que le module d'acquisition 22, forment ensemble un système de suivi de l'occupation des sièges 20, propre à déterminer de manière centralisée un état occupé ou un état libre de chacun des sièges 20.

Le premier capteur 32 est installé dans l'assise 24 du siège 20, et est propre à détecter une installation d'un utilisateur sur le siège 20 ou une libération du siège 20 par l'utilisateur, et à émettre un premier signal électrique suite à ladite détection.

Plus précisément, le premier capteur 32 est propre à détecter les changements d'état du siège 20, c'est à dire lorsqu'il passe de l'état libre à l'état occupé ou inversement.

Le deuxième capteur 34 est également installé dans l'assise 24 du siège 20, et est propre à détecter l'occupation du siège 20 par un utilisateur, et à émettre un deuxième signal électrique de manière sensiblement continue ou répétée tant que le siège 20 est occupé.

Par « sensiblement continue », on entend que l'émission du deuxième signal électrique par le deuxième capteur 34 se fait de manière continue sur une majorité de la durée de ladite émission, et que les interruptions ou les discontinuités de cette émission représentent une part négligeable de cette durée, par exemple moins de 5%.

Avantageusement, le premier capteur 32 et le deuxième capteur 34 sont des capteurs à récupération d'énergie.

Par l'expression « capteur à récupération d'énergie », on entend que le capteur récupère de l'énergie d'une source extérieure au cours de la détection qu'il met en oeuvre, et qu'au moins une partie cette énergie récupérée constitue le signal électrique généré par le capteur suite à la détection.

Avantageusement, le premier capteur 32 et le deuxième capteur 34 sont propres à émettre les premier et second signaux électriques à destination du module de communication 36.

Le module de communication 36 est relié électriquement au premier capteur 32 et au deuxième capteur 34 de manière à recevoir le premier signal électrique et le deuxième signal électrique. Il est de plus propre à communiquer avec le module d'acquisition 22 du véhicule ferroviaire 10.

Le module de communication 36 est avantageusement configuré pour émettre un signal primaire à destination du module d'acquisition 22 à la réception du premier signal électrique émis par le premier capteur 32, et à émettre, de manière répétée, un signal secondaire à la réception du deuxième signal électrique émis de manière sensiblement continue par le deuxième capteur 34.

Avantageusement, le module de communication 36 comprend une antenne 38 et est propre à communiquer avec le module d'acquisition 22 du véhicule ferroviaire 10 suivant un protocole de communication sans fil, par exemple le protocole Wi-Fi ou Enocean.

Avantageusement, le module de communication 36 est un module autonome, alimenté électriquement uniquement par les premier et deuxième capteurs 32, 34. On entend par cela que le moule de communication 36 et les premier et deuxième capteurs 32, 34 ne sont pas reliés à une source d'énergie externe, et que l'énergie utilisée pour l'envoi du signal primaire et du signal secondaire est intégralement fournie par les premier et deuxième capteurs 32, 34, à travers le premier signal électrique et le deuxième signal électrique respectivement.

Le signal primaire est émis par le module de communication 36 à destination du module d'acquisition 22, pour signaler un changement de l'état du siège 20 d'occupé à libre, ou inversement.

Le signal primaire comporte avantageusement trois trames redondantes, c'est-à-dire que le signal primaire comprend une information répétée trois fois successivement à l'identique. Comme le signal primaire n'est émis qu'une fois au moment du changement d'état du siège 20, cela permet de réduire les risques de perte d'information au cours de la transmission au module d'acquisition 22.

Le signal secondaire comprend une unique trame, envoyée de manière répétée vers le module d'acquisition 22, et qui confirme l'état occupé du siège 20. Comme il est émis de manière répétée, la non-réception d'une des occurrences du signal secondaire ne pose pas de problème.

Le signal primaire et le signal secondaire comprennent des informations qui permettent notamment au module d'acquisition 22 d'identifier le siège 20 émetteur.

Dans le mode de réalisation préférentiel représenté sur les figures, le premier capteur 32 comprend une pluralité de transducteurs piézoélectriques 40, et le deuxième capteur 34 comprend au moins une thermopile 42.

Chaque transducteur piézoélectrique 40 est propre à générer une tension électrique lorsqu'il est soumis à une contrainte mécanique qui varie dans le temps.

Les transducteurs piézoélectriques 40 sont répartis sur l'assise 24 du siège 20, de manière à générer une tension électrique lorsqu'un utilisateur s'assoit sur le siège 20 ou se lève, ce qui fait varier une contrainte mécanique exercée par l'utilisateur sur l'assise 24 et transmise aux transducteurs piézoélectriques 40.

Ainsi, le premier capteur 32 est adapté pour émettre le premier signal à destination du module de communication 36 sous la forme d'une tension électrique générée par les transducteurs piézoélectriques 40 lorsque l'utilisateur se lève ou s'assoit.

Avantageusement, le système de suivi de l'occupation du siège 20 est adapté pour déterminer si une variation de contrainte mécanique sur l'assise 24 correspond à un utilisateur qui s'assoit ou se lève, ou à une autre cause, par exemple la pose d'un bagage sur le siège 20.

A cet effet, les transducteurs piézoélectriques 40 du premier capteur 32 sont par exemple branchés en série, de sorte que les tensions électriques produites par les transducteurs piézoélectriques 40 soumis à la variation de contrainte mécanique s'additionnent. Ces tensions électriques additionnées forment le premier signal, qui présente alors une amplitude variable en fonction du nombre de transducteurs piézoélectriques 40 soumis à la variation de contrainte.

Le module de communication 36 est, dans ce cas, configuré pour comparer l'amplitude du premier signal à un seuil de détection prédéterminé, et pour envoyer le signal primaire à destination du module d'acquisition 22 uniquement si l'amplitude du premier signal est supérieure ou égale au seuil de détection.

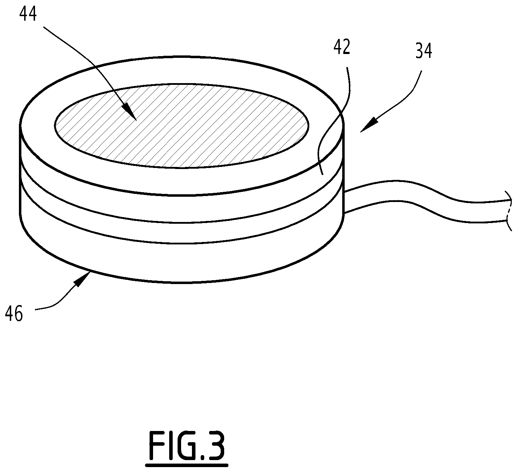

Chaque thermopile 42, comme représenté sur la figure 3, présente deux faces opposées, dont une première face 44 orientée en regard de l'assise 24 et une deuxième face orientée 46 à l'opposé de l'assise 24. La thermopile 42 est propre à générer une tension électrique de manière continue, avec une amplitude proportionnelle à une différence entre les températures des deux faces 44, 46.

La thermopile 42 convertit l'énergie thermique émise par l'utilisateur occupant le siège 20 et chauffant l'assise 24 en énergie électrique, sous forme de la tension électrique générée, qui constitue le deuxième signal.

Ainsi, le deuxième capteur 34 est adapté pour émettre le deuxième signal à destination du module de communication 36, sous la forme d'une tension électrique, de manière sensiblement continue ou répétée, tant que l'utilisateur est assis sur le siège 20.

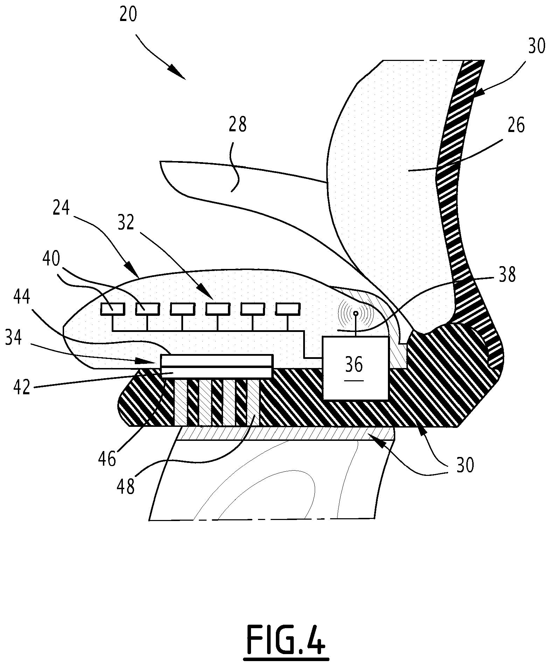

Avantageusement, comme représenté sur la figure 4, la deuxième face 46 de la thermopile 42 est reliée à la partie métallique de la structure 30 du siège 20 par un conducteur thermique 48. La partie métallique de la structure 30 joue le rôle d'un puits thermique, présentant une température constante et inférieure ou égale à la température ambiante dans le compartiment 16.

Ainsi, la deuxième face 46 de la thermopile 42 est maintenue à une température inférieure ou égale à la température ambiante dans le compartiment 16, malgré le réchauffement de l'assise 24 au contact de l'utilisateur.

Avantageusement, le module de communication 36 est adapté pour comparer une valeur du deuxième signal électrique à une valeur seuil, qui correspond à une différence de température suffisante entre les deux faces 44, 46 de la thermopile 42 pour garantir la présence d'un utilisateur sur le siège 20. La valeur seuil correspond par exemple à une différence de température de 7°C. Le module de communication 36 est alors configuré pour émettre le signal secondaire uniquement si l'amplitude du deuxième signal est supérieure ou égale à la valeur seuil.

Le module d'acquisition 22 est propre à recevoir les signaux primaires et les signaux secondaires émis par chacun des sièges 20 et à en déduire l'état occupé ou libre de chaque siège 20.

Le module d'acquisition 22 est configuré pour déterminer que le siège 20 a changé d'état à la réception d'au moins une des trames, et la redondance réduit le risque de perte d'information, le signal primaire n'étant émis qu'au moment du changement d'état du siège 20.

Le module d'acquisition 22 est également configuré pour corriger un éventuel état erroné d'un des sièges 20, à partir du signal secondaire. En effet, le signal secondaire est émis uniquement lorsque le siège 20 est occupé, et la réception du signal secondaire par le module d'acquisition 22 permet de corriger un éventuel état erroné du siège 20 considéré comme libre suite à une erreur lors de l'émission et de la réception du signal primaire.

Un procédé de détection de l'occupation d'un siège 20 du véhicule ferroviaire 10 par un utilisateur va maintenant être décrit.

Le siège 20 est initialement inoccupé, et son état est considéré comme libre par le module d'acquisition 22.

Le procédé comprend une étape d'installation d'un utilisateur sur le siège 20, en appui contre l'assise 24.

Lors de cette étape, l'utilisateur exerce une contrainte sur la face supérieure de l'assise 24, ce qui fait varier la contrainte mécanique s'appliquant sur au moins une partie des transducteurs piézoélectriques 40 du premier capteur 32.

Le procédé comprend, simultanément à l'installation de l'utilisateur, une étape d'émission du premier signal par le premier capteur 32, puis d'émission du signal primaire par le siège 20.

Lors de cette étape, la variation de la contrainte mécanique s'appliquant sur les transducteurs piézoélectriques 40 entraîne la génération par chacun d'eux d'une tension électrique. Les tensions électriques générées s'additionnent et forment le premier signal, qui est transmis au module de communication 36 par liaison filaire.

A la réception du premier signal, le module de communication 36 émet le signal primaire à destination du module d'acquisition 22. L'énergie utilisée pour l'envoi du signal primaire est entièrement fournie par le premier capteur 32, sous forme de la tension électrique formant le premier signal.

Le module d'acquisition 22 reçoit le signal primaire et enregistre un changement d'état du siège 20 de libre à occupé.

Avantageusement, le signal primaire comprend trois trames redondantes, et la réception d'au moins une des trames par le module d'acquisition 22 permet de déterminer le changement d'état du siège 20.

Au cours d'une étape d'occupation du siège 20 par l'utilisateur, l'utilisateur en contact avec l'assise 24 chauffe l'assise 24, ce qui élève la température de la première face 44 de la ou de chaque thermopile 42 du deuxième capteur 34. Ceci entraine la formation d'une différence de température entre la première face 44 et la deuxième face 46.

Le procédé comprend alors une étape d'émission du deuxième signal par le deuxième capteur 34, et d'émission du signal secondaire par le siège 20.

Lors de cette étape, une tension électrique est générée par la ou par chaque thermopile 42 du deuxième capteur 34 de manière sensiblement continue sous l'effet de la différence de température entre ses faces 44, 46, et transmise au module de communication 36. L'élévation de la température de la première face 44 permet à la tension générée de dépasser la valeur seuil, et la tension électrique est interprétée comme le deuxième signal par le module de communication 36.

Tant que le module de communication 36 reçoit le deuxième signal, il émet de manière répétée le signal secondaire à destination du module d'acquisition 22. Le module d'acquisition 22 confirme l'état occupé du siège 20, ou corrige l'état libre erroné, si la réception du premier signal avait échoué. L'énergie consommée pour l'envoi du signal secondaire est intégralement fournie par le deuxième capteur 34, sous forme de tension électrique, par le deuxième signal.

Le procédé comprend ensuite une étape de libération du siège 20 par l'utilisateur, ce qui met fin à la contrainte mécanique s'appliquant sur l'assise 24. La contrainte mécanique s'appliquant sur les transducteurs piézoélectriques 40 du premier capteur 32 varie donc.

Le procédé comprend alors une nouvelle étape d'émission du premier signal par le premier capteur 32 et d'émission du signal primaire par le module de communication 36 comme précédemment décrit.

Le signal primaire est reçu par le module d'acquisition 22, qui enregistre le changement d'état du siège 20 d'occupé à libre.

Avantageusement, le module de communication 36 est configuré pour arrêter d'émettre le signal secondaire à la réception du premier signal, s'il a précédemment émis le signal secondaire de manière répétée pendant une durée prédéterminée.

Le premier signal reçu correspond alors à la libération du siège 20 par l'utilisateur. Cependant, l'arrêt immédiat de l'émission du deuxième signal par le deuxième capteur 34 n'est pas garanti.

En effet, la température de l'assise 24 ne revient pas instantanément à la température ambiante lors de la libération du siège 20, et le module de communication 36 continue à recevoir le deuxième signal.

Le signal secondaire n'est alors pas envoyé, ce qui n'entraine pas de correction de l'état libre du siège 20, pendant une durée prédéterminée suffisante pour le retour de l'assise 24 à la température ambiante.

En variante, le premier capteur 32 et/ou le deuxième capteur 34, sont intégrés au dossier 26 et fonctionnent exactement de la même manière que décrit précédemment, et détectant les variations de contraintes et/ou de température provoquées sur le dossier 26 par l'installation de l'utilisateur sur le siège 20.

En variante, le ou les sièges 20 et le module d'acquisition 22 sont installés dans un véhicule autre qu'un véhicule ferroviaire, comme par exemple un autocar ou un navire, ou bien dans une pièce d'un bâtiment, comme par exemple une salle d'attente.

## Revendications

1. Siège (20), notamment pour véhicule, comprenant un premier capteur (32) agencé pour générer un premier signal électrique lors d'une installation d'un utilisateur sur le siège (20) et lors de la libération du siège (20) par l'utilisateur, **caractérisé en ce que** le siège (20) comprend également un deuxième capteur (34) propre à générer un deuxième signal électrique de manière sensiblement continue ou répétée quand l'utilisateur est assis sur le siège (20),
dans lequel le premier capteur (32) et le deuxième capteur (34) sont des capteurs à récupération d'énergie
le deuxième capteur (34) comprenant au moins une thermopile (42) disposée sous une assise (24) ou un dossier (26) du siège, la thermopile (42) présentant une première face (44) s'étendant en regard de l'assise (24) ou du dossier (26) et une deuxième face (46) s'étendant à l'écart de l'assise (24) ou du dossier (26)..

2. Siège (20) selon la revendication 1, comprenant un module de communication (36) configuré pour émettre à destination d'un module d'acquisition (22) un signal primaire lorsque le premier capteur (32) génère le premier signal électrique et un signal secondaire lorsque l'utilisateur est assis sur le siège (20) et que le deuxième capteur (34) génère le deuxième signal électrique.

3. Siège (20) selon la revendication 2, dans lequel le module de communication (36) est un module autonome, alimenté électriquement uniquement par le premier capteur (32) et le deuxième capteur (34).

4. Siège (20) selon l'une quelconque des revendications 1 à 3, dans lequel le premier capteur (32) comprend au moins un transducteur piézoélectrique (40).

5. Siège (20) selon la revendication 4, dans lequel le premier capteur (32) comprend une pluralité de transducteurs piézoélectriques (40) répartis sous une assise (24) et/ou un dossier (26) du siège (20), le premier capteur (32) étant configuré pour détecter l'installation de l'utilisateur sur le siège (20) ou la libération du siège (20) par l'utilisateur, et générer le premier signal lorsqu'au moins un nombre prédéterminé des transducteurs piézoélectriques (40) subissent une variation de contrainte mécanique.

6. Siège (20) selon la revendication 2, dans lequel le module de communication (36) est configuré pour arrêter d'émettre le signal secondaire suite à la libération du siège (20) par l'utilisateur, quand bien même le deuxième capteur (34) continuerait à émettre le deuxième signal en raison d'une température résiduelle de l'assise (24) ou du dossier (26).

7. Siège (20) selon la revendication 1 ou 6, dans lequel la deuxième face (46) de la thermopile (42) est reliée par un conducteur thermique (48) à une structure (30) métallique du siège (20).

8. Véhicule (10), notamment ferroviaire, comprenant une pluralité de sièges (20) selon l'une quelconque des revendications 1 à 7, et un module d'acquisition (22) propre à recevoir des signaux fonction du premier et/ou du deuxième signal, et à déterminer un état occupé ou libre de chacun des sièges (20) en fonction des signaux reçus.

9. Procédé de détection de l'occupation par un utilisateur d'un siège (20) selon l'une quelconque des revendications 1 à 7, le procédé comprenant les étapes suivantes :
- installation de l'utilisateur sur le siège (20) et application d'une pression par l'utilisateur sur le siège (20) ;
- génération du premier signal par le premier capteur (32) et émission d'un signal primaire à destination d'un module d'acquisition (22) ;
- réception du signal primaire par le module d'acquisition (22) et détermination d'un changement d'état du siège (20) vers un état occupé ;
- occupation du siège (20) par l'utilisateur et génération de manière continue ou répétée du deuxième signal par le deuxième capteur (34) et émission continue ou répétée d'un signal secondaire à destination du module d'acquisition (22) ;
- réception du signal secondaire par le module d'acquisition (22) et confirmation de l'état occupé du siège (20), ou correction d'un état libre erroné par le module d'acquisition (22) ;
- libération du siège (20) par l'utilisateur, génération du premier signal par le premier capteur (32) et émission du signal primaire à destination du module d'acquisition (22) ; et
- réception du signal primaire par le module d'acquisition (22) et détermination d'un changement d'état du siège (20) vers un état libre.

10. Procédé selon la revendication 9, dans lequel l'étape de libération du siège (20) comprend l'arrêt de l'émission répétée du signal secondaire.

11. Procédé selon la revendication 9 ou 10, dans lequel le signal primaire comprend trois trames redondantes, le module d'acquisition (22) déterminant le changement d'état du siège (20) par la réception d'au moins une desdites trames.

## Patentansprüche

1. Sitz (20), insbesondere für ein Fahrzeug, umfassend einen ersten Sensor (32), der so angeordnet ist, dass er ein erstes elektrisches Signal erzeugt, wenn sich ein Benutzer auf den Sitz setzt (20) und bei der Freigabe des Sitzes (20) durch den Benutzer, **dadurch gekennzeichnet, dass** der Sitz (20) ebenfalls einen zweiten Sensor (34) umfasst, der imstande ist, ein zweites elektrisches Signal im Wesentlichen kontinuierlich oder wiederholt zu erzeugen, wenn der Benutzer auf dem Sitz (20) sitzt,
wobei der erste Sensor (32) und der zweite Sensor (34) Sensoren mit Energierückgewinnung sind,
wobei der zweite Sensor (34) mindestens eine Thermosäule (42) umfasst, die unter einer Sitzfläche (24) oder einer Rückenlehne (26) des Sitzes angeordnet ist, wobei die Thermosäule (42) eine erste Fläche (44) und eine zweite Fläche (46) aufweist, die sich der Sitzfläche (24) oder der Rückenlehne (26) zugewandt erstreckt, und eine zweite Fläche (46), die sich von der Sitzfläche (24) oder der Rückenlehne (26) beabstandet erstreckt.

2. Sitz (20) nach Anspruch 1, umfassend ein Kommunikationsmodul (36), das derart ausgelegt ist, dass es an ein Erfassungsmodul (22) ein primäres Signal sendet, wenn der erste Sensor (32) das erste elektrische Signal erzeugt, und ein sekundäres Signal, wenn der Benutzer auf dem Sitz (20) sitzt und der zweite Sensor (34) das zweite elektrische Signal erzeugt.

3. Sitz (20) nach Anspruch 2, wobei das Kommunikationsmodul (36) ein eigenständiges Modul ist, das nur von dem ersten Sensor (32) und dem zweiten Sensor (34) elektrisch versorgt wird.

4. Sitz (20) nach einem der Ansprüche 1 bis 3, wobei der erste Sensor (32) mindestens einen piezoelektrischen Wandler (40) umfasst.

5. Sitz (20) nach Anspruch 4, wobei der erste Sensor (32) eine Vielzahl von piezoelektrischen Wandlern (40) umfasst, die unter einer Sitzfläche (24) und/oder einer Rückenlehne (26) des Sitzes (20) verteilt sind, wobei der erste Sensor (32) dazu ausgelegt ist, zu erkennen, wenn sich der Benutzer auf den Sitz (20) setzt oder der Sitz (20) vom Benutzer freigegeben wird, und das erste Signal zu erzeugen, wenn mindestens eine vorbestimmte Anzahl der piezoelektrischen Wandler (40) eine Änderung der mechanischen Belastung erfährt.

6. Sitz (20) nach Anspruch 2, wobei das Kommunikationsmodul (36) dazu ausgelegt ist, das Senden des sekundären Signals nach der Freigabe des Sitzes (20) durch den Benutzer zu beenden, auch wenn der zweite Sensor (34) weiterhin das zweite Signal aufgrund einer Resttemperatur der Sitzfläche (24) oder der Rückenlehne (26) senden sollte.

7. Sitz (20) nach Anspruch 1 oder 6, wobei die zweite Fläche (46) der Thermosäule (42) über einen Wärmeleiter (48) mit einer Metallstruktur (30) des Sitzes (20) verbunden ist.

8. Fahrzeug (10), insbesondere Schienenfahrzeug, mit einer Vielzahl von Sitzen (20) nach einem der Ansprüche 1 bis 7 und einem Erfassungsmodul (22), das imstande ist, Signale in Abhängigkeit von dem ersten und/oder dem zweiten Signal zu empfangen und einen besetzten oder freien Zustand jedes der Sitze (20) in Abhängigkeit von den empfangenen Signalen festzustellen.

9. Verfahren zur Ermittlung der Belegung eines Sitzes (20) durch einen Benutzer nach einem der Ansprüche 1 bis 7, wobei das Verfahren die folgenden Schritte umfasst:
- Setzen des Benutzers auf den Sitz (20) und Ausüben eines Drucks durch den Benutzer auf den Sitz (20);
- Erzeugen des ersten Signals durch den ersten Sensor (32) und Senden eines primären Signals an ein Erfassungsmodul (22);
- Empfangen des primären Signals durch das Erfassungsmodul (22) und Feststellen einer Änderung des Zustands des Sitzes (20) in einen besetzten Zustand;
- Besetzen des Sitzes (20) durch den Benutzer und kontinuierliches oder wiederholtes Erzeugen des zweiten Signals durch den zweiten Sensor (34) und kontinuierliches oder wiederholtes Senden eines sekundären Signals an das Erfassungsmodul (22);
- Empfangen des sekundären Signals durch das Erfassungsmodul (22) und Bestätigen des besetzten Zustands des Sitzes (20) oder Korrektur eines falschen freien Zustands durch das Erfassungsmodul (22);
- Freigeben des Sitzes (20) durch den Benutzer, Erzeugen des ersten Signals durch den ersten Sensor (32) und Senden des primären Signals an das Erfassungsmodul (22); und
- Empfangen des primären Signals durch das Erfassungsmodul (22) und Feststellen einer Änderung des Zustands des Sitzes (20) in einen freien Zustand.

10. Verfahren nach Anspruch 9, wobei der Schritt des Freigebens des Sitzes (20) das Beenden des wiederholten Sendens des sekundären Signals umfasst.

11. Verfahren nach Anspruch 9 oder 10, wobei das primäre Signal drei redundante Frames umfasst, wobei das Erfassungsmodul (22) die Statusänderung des Sitzes (20) durch den Empfang von mindestens einem der Frames feststellt.

## Claims

1. A seat (20), in particular for a vehicle, comprising a first sensor (32) arranged in order to generate a first electrical signal upon a user seating themselves on a seat (20) and upon the vacating of the seat (20) by the user,
**characterised in that** the seat (20) also comprises a second sensor (34) that is capable of generating a second electrical signal in a substantially continuous or repeated manner when the user is seated on the seat (20),
wherein the first sensor (32) and the second sensor (34) are energy harvesting sensors,
the second sensor (34) comprising at least one thermopile (42) arranged under a seating base (24) or a back rest (26) of the seat, with the thermopile (42) having a first surface (44) that extends so as to be facing the seating base (24) or the back rest (26) and a second surface (46) that extends away from the seating base (24) or the back rest (26).

2. A seat (20) according to claim 1, comprising a communication module (36) configured so as to transmit onward to a data acquisition module (22) a primary signal when the first sensor (32) generates the first electrical signal, and a secondary signal when the user is seated on the seat (20) and the second sensor (34) generates the second electrical signal.

3. A seat (20) according to claim 2, wherein the communication module (36) is an autonomous module, which is electrically powered only by the first sensor (32) and the second sensor (34).

4. A seat (20) according to any one of claims 1 to 3, wherein the first sensor (32) comprises at least one piezoelectric transducer (40).

5. A seat (20) according to claim 4, in which the first sensor (32) comprises a plurality of piezoelectric transducers (40) that are distributed under a seating base (24) and/or a back rest (26) of the seat (20), the first sensor (32) being configured so as to detect the user seating themselves on the seat (20) or the vacating of the seat (20) by the user, and to generate the first signal when at least a predetermined number of the piezoelectric transducers (40) undergo a variation in mechanical stress.

6. A seat (20) according to claim 2, wherein the communication module (36) is configured so as to stop transmitting the secondary signal following the vacating of the seat (20) by the user, even if the second sensor (34) were to continue to emit the second signal on account of the seating base (24) or the back rest (26) having a residual temperature.

7. A seat (20) according to claim 1 or 6, in which the second surface (46) of the thermopile (42) is connected by a thermal conductor (48) to a metal structure (30) of the seat (20).

8. A vehicle (10), in particular a railway vehicle, comprising a plurality of seats (20) according to any one of claims 1 to 7, and an data acquisition module (22) that is capable of receiving signals based on the first and/or the second signal, and of determining the occupied or vacant status of each of the seats (20) as a function of the signals received.

9. A occupancy detection method for detecting the occupying of a seat by a user (20) according to any one of claims 1 to 7, the method comprising the following steps:
- the user seating themselves on the seat (20) and applying of a pressure by the user on the seat (20);
- generation of the first signal by the first sensor (32) and transmission of a primary signal being sent to a data acquisition module (22);
- reception of the primary signal by the data acquisition module (22) and determination of a change of status of the seat (20) to an occupied status;
- occupying of the seat (20) by the user and generation in a continuous or repeated manner of the second signal by the second sensor (34) and continuous or repeated transmission of a secondary signal being sent to the data acquisition module (22);
- reception of the secondary signal by the data acquisition module (22) and confirmation of the occupied status of the seat (20), or correction of an erroneous vacant status by the data acquisition module (22);
- vacating of the seat (20) by the user, generation of the first signal by the first sensor (32) and transmission of the primary signal being sent to the data acquisition module (22); and
- reception of the primary signal by the data acquisition module (22) and determination of a change of status of the seat (20) to a vacant status.

10. A method according to claim 9, wherein the step of vacating the seat (20) includes the stopping of the repeated transmission of the secondary signal.

11. A method according to claim 9 or 10, in which the primary signal comprises three redundant frames, with the data acquisition module (22) determining the change of status of the seat (20) by the reception of at least one of the said frames.
